# EUROPEAN PATENT SPECIFICATION

(11) **EP 2 213 354 B1**
(45) Date of publication and mention of the grant of the patent: **01.12.2010**
(21) Application number: 09000444.1
(22) Date of filing: 14.01.2009
(51) Int. Cl.: B01D 25/176

(54) **Edge strip for retaining a filter cloth, filter element and frame member for the reception of an edge strip**
Randstreifen zum Zurückhalten eines Filtertuchs, Filterelement und Rahmenelement zur Aufnahme eines Randstreifens
Bande de bordure pour la rétention d'une toile filtrante, élément de filtre et élément de cadre pour la réception d'une bande de bordure

(43) Date of publication of application: 04.08.2010
(73) Proprietor: Sefar AG, 9410 Heiden (CH)
(72) Inventor: Minebois, Sandrine, 59215 Abscon (FR); Ribet, Jean-Louis, 59221 Beauvin (FR); Mortreux, Jean-René, 59112 Annoeulin (FR)
(74) Representative: Wunderlich, Rainer

(56) References cited:
- EP-A- 0 636 397
- WO-A-2007/033698
- DE-A1- 10 024 725

## Description

The present invention relates to an edge strip for retaining a filter cloth, the edge strip comprising a base to be fixed to a frame member and a connection portion to be connected to the filter cloth.

The present invention also relates to a filter element comprising a filter cloth and a frame member for the reception of an edge strip for retaining a filter cloth.

In the case of known filter elements for chamber filters, membrane filters and filter presses, filter cloth blanks have to be fixed on support frames. The blanks are overlapping the edge of the support frame and are connected to the frames by cords, wires, clips and similar. The positioning and fixing of the filter cloth blanks on the support frame in a fluid-tight manner is a time-consuming process.

To facilitate this process, WO 2005/053815 A1 discloses an arrangement for retaining the edges of a filter cloth, comprising an edge strip having a beat which engage with a channel in a frame member and be retained therein by a wedging member. The wedging member may be separate or attached to the beat, or incorporated therein. This known arrangement for retaining a filter cloth comprises an edge strip member or connection to a filter cloth edge region, the edge strip member having an elongate body extending there along, wherein said body has means for engaging a complementary part of a frame member, and pressure exerting means for pressing said body into engagement with said complementary part.

The EP 0 636 397 B 1 discloses a filter element for a chamber, membrane filter or the like. The chamber filter comprises an essentially rigid, plate-shaped carrying frame with a circumferential mounting groove. Openings are provided in the carrying frame to supply a flow of a medium to be filtered and to remove a filtrate from the medium to be filtered. The filter cloth has an edge strip for the detachable fitting of the filter cloth to the carrying frame. The edge strip is adapted, in shape and cross-section, to the mounting groove and adapted to be pressed into the mounting groove. This pressing is usually carried out by means of a hammer or another hitting tool.

DE 100 24 725 A1 discloses a membrane filter plate for a filter press. A mounting plate comprises a mounting groove and a membrane comprises a connecting strip with a bottom part to be connected to the mounting groove of the mounting plate.

From WO 2007 033698 A1 a connector arrangement for connecting the ends of one or more sheets of a flexible material, as for example a transport belt or a filter belt, is known.

It is an **object** of the present invention to provide an edge strip for retaining a filter cloth, a corresponding frame member for the reception of an edge strip and a filter element comprising a filter cloth, wherein the edge strip can be driven into a frame member more easily while achieving a tight and secure fit of the edge strip in the frame member.

This object is solved by an edge strip with the features of claim 1, by a filter element with the features of claim 6 and by a filter with the features of claim 11.

In the inventive edge strip for retaining a filter cloth a two wing structure with a first wing and a second wing extending in substantially opposite directions from the base is provided, the first wing forms the connection portion for connecting the filter cloth and the second wing is arranged obliquely with respect to the first wing and projects from a plane of the connection portion. The cross-sectional shape is similar to a "y" or a butterfly.

It is a first idea of the invention to provide an edge strip with a larger hitting area such that a user can drive the edge strip into a frame member more easily. This makes the edge strip easier to handle and damages to frame members which result from hitting the frame member instead of the edge strip are also greatly reduced.

It is another fundamental idea of the invention to provide improved visual control when driving the edge strip into the frame member. Due to the shape of the edge strip which is flat on one side facing the centre of the filter cloth and inclined on the other side and the geometry of the frame member which has a corresponding shape in order to receive the edge strip, it is easier for the user to check at which position the edge strip is already driven into the frame member and at where it is not yet driven in. At the positions where the edge strip is not yet appropriately driven into the frame member, the edge strip is slightly elevated which can be spotted easily by the gap between the edge strip and the frame member. This makes it easier for the user to decide whether or not the edge strip is correctly driven into the frame member.

It is yet another fundamental idea of the invention to provide a better fitting or truing of the edge strip into the frame member in the corner regions of the edge strip. In corner regions the shape of the outer wing facilitates the fitting into curves. Further, another big advantage is an easier unsetting of the edge strip.

The first wing and the second wing of the edge strip are extending in substantially opposite directions from the base. As the first wing forms the connection portion, the plane of the first wing is called the connection plane. The second wing is arranged obliquely with respect to the first wing or stated differently the second wing does not lie in the connection plane. Regarding the cross-section of the base strip, if the base is placed at the bottom and the first wing extends to the right, then the second wing extends either to the top left edge or the bottom left edge. The second wing extends to the top left edge which is equivalent to stating that the angle between the first and the second wing is more than 90° but less than 180°, in a preferred embodiment more than 120° and less than 140°.

According to the invention it is preferred that the base and wings of the edge strip for retaining a filter cloth are extruded in one piece. One advantage of this embodiment is that both the wings and the base form one single piece, which makes this piece not as fragile as if three parts were fixed together by some retaining means or mechanism. This means that the edge strip according to this embodiment will have increased stability. Another advantage of this embodiment is that the base and the wings are extruded along an axis. This means that the cross-section or profile of the edge strip remains the same while it is extruded along one axis. It is also possible for the edge strip to make curves or form a closed loop while the cross-section remains the same. Such a long strip can then be driven into a frame member whose outline or contour can have arbitrary shape while the cross-section of the edge strip still shows the same contour.

In yet another inventive embodiment it is preferred that at least one reinforcing element is arranged inside of the edge strip. This makes the edge strip more stable and robust to external forces which act on the edge strip while it is driven into a frame member or remains in a frame member. The reinforcing element would be a thread or a fabric, both made out of a plastic material or metal. Preferably a single thread is provided.

Another especially preferred embodiment is that there are three threads as reinforcing elements inside of the edge strip, a first thread running inside the base, a second thread running inside the first wing and a third thread running inside the second wing. The base and the two wings are subject to particularly strong forces, because they have a longish shape and are arranged on the outer parts of the edge strip. Therefore it is especially advantageous if these parts carry reinforcing elements inside of them. These enforcing elements can also be made from plastic or be metal wires instead. The course of the enforcing elements can be straight or spiral.

In a preferred variant the edge strip comprises a flexible rubber, synthetic rubber or plastics material, in particular a thermoplastic elastomer. The elastic edge strip can be made of materials with rubber-like properties and may also be a composite comprising rubbers of different hardness. For example a softer rubber may be used between the filter cloth and the edge strip and a harder rubber for the base and the outer wing.

The invention also deals with a filter element comprising a filter cloth. The inventive filter element comprising a filter cloth is **characterized in that** an edge of the filter cloth is connected to an inventive edge strip. Such an arrangement combines the advantages of the inventive edge strip and a filter cloth. A flexible filter cloth can be attached to the first wing of the edge strip. As the first wing is preferably flat, a filter cloth can be fixed onto the flat wing of an edge strip forming a closed loop. Such an edge strip of an inventive filter element can then be driven in a frame member wherein the shape of the frame member can exhibit various shapes. As the edge strip of the inventive filter element is flexible, it can adapt to various different shapes of the frame member.

According to the invention the term filter cloth should be understood in a generalized meaning. It can also be made from any kind of filtering material, felt, knitted fabric or interlaced yarns or any other textile, web, membrane, paper like material, fleece, fibrous web, non-woven material, porous solids, candle filters which can be made from sintered metals or ceramic fibres or glass fibres. Such a filtering material should be porous and penetrable to liquids while it should be able to filter out certain solids contained in the medium to be filtered.

In another preferred embodiment of the inventive filter element the filter cloth is surrounded by the edge strip forming a closed loop, wherein the first wing faces the centre of the closed loop. In reality a filter element is often used in such an arrangement. Preferably the closed loop of the first wing has a flat surface and the filter cloth is spanned or clamped onto this flat surface.

It is further preferred that the form of the loop is a square, a rectangle, an octagon, a polygon, a circle or an ellipsoid. Apart from those shapes there are also many other conceivable shapes which can be used for such a filter element in a filter press. Those shapes should also be within the scope of the present invention as long as the filter element can be used in a filter press.

In yet another embodiment of the present invention the second wing has a cut or a notch at a position where the edge strip is curved. The advantage herewith is that if a filter element is driven into a curved frame member, then due to the shape of the edge strip the second outside wing will be stretched and lengthened. This will result in increased stress and possibly wear to the edge strip, in particular to the outer second wing. In order to get rid of this unwanted stress there is provided a cut or a notch in the second wing at a curved portion reducing or even eliminating the stress in the second wing.

According to the invention it is particularly preferred that the filter cloth is fixed to the first wing by sewing, stitching, casting, injection moulding, gluing, welding or heat-sealing. Those methods are all advantageously suited to fix a filter cloth to an edge strip or in particular the first wing of such an edge strip. Any other method to fix an inventive filter cloth material to an inventive edge strip should also be included within the scope of the present invention.

It is another subject of the invention to provide a frame member for the reception of an edge strip for retaining a filter cloth, particular for the reception of an inventive edge strip. The inventive frame member for the reception of an edge strip for retaining a filter cloth is **characterized in that** a portion of the frame member comprises an channel for the positive-fit reception of the base of the edge strip, wherein the channel is surrounded by an inner edge surface and an outer edge surface, the inner edge surface being essentially orthogonal to the channel and facing the side of the edge strip which receives the filter cloth, and the outer edge surface is arranged obliquely to the inner edge surface.

Preferably the frame member consists of rods or profiles. The cross-section of the frame exhibits a channel which is open to the top side. The inner edge surface is the surface on top of the frame member on one side of the channel. It is called inner edge surface because it faces the interior of an assembled filter element including a frame member. The outer edge surface is situated to the other side on the upper surface of the frame member next to the channel. The shape of the channel and the adjacent inner and outer edges surfaces is such that an inventive edge strip with its base positively fits into the shape formed by the channel and the adjacent inner and outer edge surfaces. The edge strip preferably has a first wing which is essentially orthogonal to the base. Between the first wing and the second wing there is an angle of more than 90° and less than 180°. In a preferred embodiment the angle ranges between 120° and 140°. Accordingly the inventive frame member has an outer edge surface corresponding to the second wing. This means that the level of the outer surface is increasing to the outside.

In yet another preferred embodiment of the frame member the channel forms a closed loop. This allows a fluid tight arrangement.

In this connection it is also conceivable that the form of the loop is a square, a rectangle, an octagon, a polygon, a circle or an ellipsoid. The form of the frame member can also be a combination of the aforementioned shapes or even a more complicated shape forming a closed loop.

Another particularly preferred embodiment of the inventive frame member comprises an inventive filter element which is fixed to the frame member. This embodiment is the end product to be used in a filter press. This embodiment comprises an edge strip forming a closed loop, a filter cloth having the same shape as the closed loop and being fixed to the first wing of the edge strip and a frame member with a channel again having the same shape as the closed loop wherein the base of the edge strip is driven into the channel of the frame member. The advantage is that the filter cloth can be fixed to the edge strip very tightly. Advantageously the filter cloth has a flat surface due to the form of the first wing of the edge strip. In addition after driving the filter element, comprising of the edge strip and the filter cloth, into the frame member, the whole arrangement is very stable because the shape of the frame member perfectly fits to the shape of the filter element in particular to the edge strip of the filter element.

As the material of the edge strip is flexible, the width of the base should be bigger than the width of the channel. After driving the base into the channel by force the base will expand again and assure a tight positive fit of the base to the form of the channel.

The invention is described herein after relative to preferred embodiments and diagrammatic drawings, wherein show:
- Fig. 1: a diagrammatic cross-sectional view showing an inventive edge strip for re- taining a filter cloth;
- Fig. 2: a diagrammatic cross-sectional view of an inventive frame member for the re- ception of an edge strip;
- Fig. 3: a diagrammatic top view of an inventive frame member with an inventive filter element driven into the channel of the frame member.

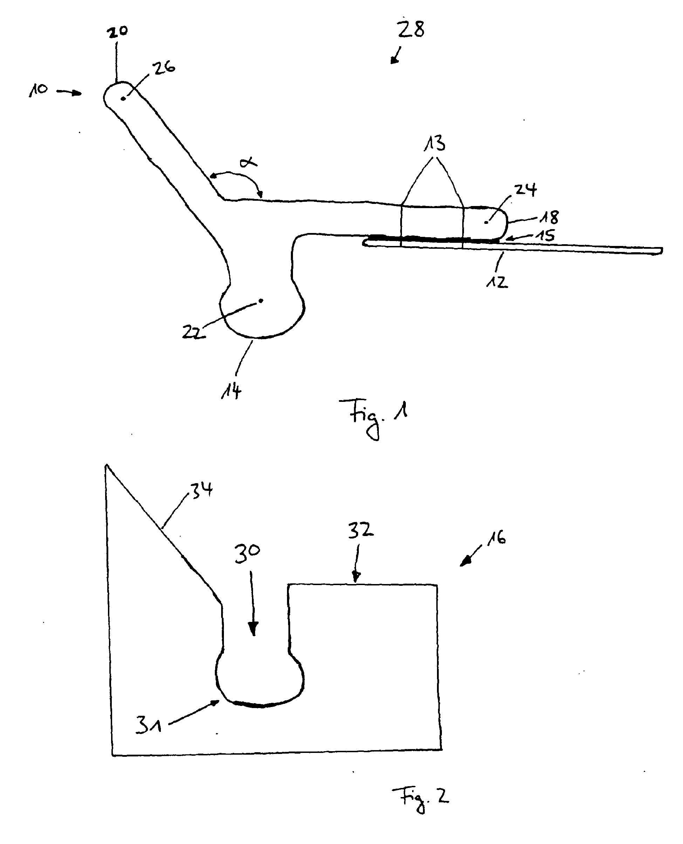

Fig. 1 illustrates a cross-sectional view of a typical embodiment of an inventive filter element 28. The filter element 28 comprises an edge strip 10 and a filter cloth 12. The edge strip 10 consists of a base 14 at a bottom of fig. 1. The lower portion of the base 14 is thickened. The thickened part has a round or ball-like shape. On a top portion of the base 14 the edge strip 10 has two wings 18, 20. The first wing 18 is essentially orthogonal to the longish base 14 and extends to the right hand side of fig. 1. The first wing 18 is comparably thin and flat. The plane in which the first wing 18 is situated is called the connection plane. The second wing 20 does not lie within the connection plane but projects from it. In this embodiment the second wing 20 has about the same thickness as the first wing 18. The thickness of the base 14 is slightly larger than twice the width of either over the wings 18, 20. The length of the second wing 20 is shorter than the length of the first wing 18. The length of the base 14 is shorter than both of the wings 18, 20. This embodiment shows that the upper surface of the wing 18 is the largest surface of the edge strip 10. This surface can be used to drive the edge strip 10 into a frame member 16 using a hammer.

Preferably the filter cloth 12 is fixed to the first wing 18 of the edge strip 10 at the lower surface of the first wing 18. The filter cloth 12 is sewed or stitched to the first wing 18 using threads 13. Optionally there can be a fluid-tight seal 15 between the first wing 18 and the filter cloth 12 to prevent any liquid from leaking through a possible small gap between the filter cloth 12 and the first wing 18.

It is also possible to fix the filter cloth 12 to the upper or to both the upper and the lower side of the first wing 18. An angle α between the first wing 18 and the second wing 20 is about 130°.

There are three threads 22, 24, 26 inside the edge strip 10. The first thread 22 runs along the direction of extrusion inside near the centre of the base 14. The second thread 24 runs along the first wing 18 and is located in the lateral centre of the first wing 18 near its outer end and averted from the base 14. The third thread 26 runs along the second wing 20, near to its lateral centre and its outer end of the second wing 20 averted from the base 14.

The filter cloth 12 is fixed to the first wing 18 of the edge strip 10 by stitching or welding.

Fig. 2 shows a cross-sectional view of an inventive frame member 16. The frame member 16 is made from one single piece and exhibits a channel 30 in the centre of the frame member 16. The channel 30 has a recess 31 at the lower end of the channel 30. The thickened part of the base 14 positively fits into this recess 31. The thickened part of the base 14 is wider than the upper opening of the channel 30, but as the material of the edge strip 10 is flexible, the edge strip 10 can be driven into the frame 16 such that the thickened part of the base 14 will be at the position of the recess 31.

The upper surface of the frame member 16 right to the channel is called the inner edge surface 32. The surface on the other side of the channel is the outer edge surface 34. The inner edge surface 32 faces the interior of an inventive filter element 28. The inner edge surface 32 is basically orthogonal to the longish channel 30. In this embodiment the slope of the outer edge surface 34 is inclined to the inner edge surface 32 and increases starting from the channel 30 to the outer end of surface 34. The inventive filter element 28 can be driven into the frame member 16. In the state where the filter element 28 or the edge strip 10 is driven into the frame member 16, the base 14 positively fits into the channel 30 and both wings 18, 20 are adjacent to the inner and outer edge surfaces 32, 34. A prerequisite for this is that the angle of the second wing 20 relative to the first wing 18 has the same value as the angle of the surface of the outer edge surface 34 relative to the inner edge surface 32. The width of the base 14 should be slightly larger than the width of the channel 30 such that in the state where the edge strip is driven into the frame member 16, there should be a strong positive fit of the edge strip 10 inside the frame member 16.

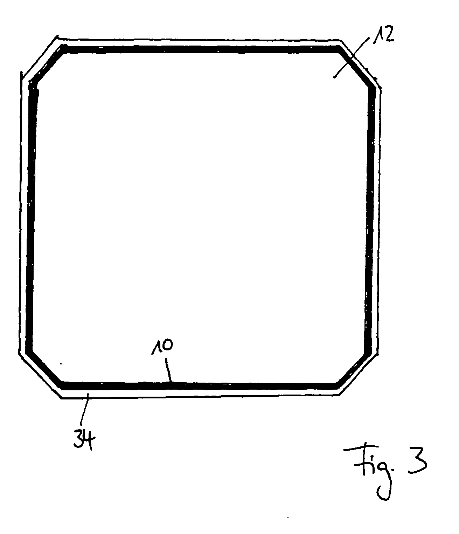

Fig. 3 shows a top view of an inventive frame member 16 comprising an inventive filter element 28. The filter element 28 comprises itself an edge strip 10 and a filter cloth 12. As the filter element 28 is driven into the frame member 16, a top view only shows the filter cloth 12, a part of the edge strip 10, i.e. a small part of the first wing 18 and the whole second wing 20 and an outer part of the outer edge surface 34. In the current embodiment the shape of the frame member 16 has an octagonal shape. The filter cloth 12, the channel 30, the edge strip 10 and the outer and inner edge surfaces 32, 34 also have the same shape. By placing multiple filter elements 28 of fig. 3 next to each other one gets the arrangement of a filter press.

At the portion where the edge strip 10 is curved or has an angle, there is provided a cut or a notch in the second wing 20 so as to avoid pulling forces into the second wing 20. If the curvature is not very strong it is sufficient to cut the second wing 20 only partly starting from the outer edge of the second wing 20. But if the curvature is very high it might be necessary to cut the second wing 20 all the way to the position where the base 14 begins.

## Claims

1. Edge strip for retaining a filter cloth (12) in a frame member, the edge strip (10) comprising:
- a base (14) fixable to the frame member (16) and
- a connection portion connectable to the filter cloth,
**characterized in that**
- a two wing structure (18, 20) with a first wing (18) and a second wing (20) extending in substantially opposite directions from the base (14) is provided,
- the first wing (18) forms the connection portion for connecting the filter cloth (12) and
- the second wing (20) is arranged obliquely with respect to the first wing (18) and projects from a plane of the connection portion, wherein an angle between the first wing (18) and the second wing (20) is more than 90° and less than 180°.

2. Edge strip for retaining a filter cloth (12) according to claim 1,
**characterized in that**
the base (14) and the wings (18, 20) are extruded in one piece.

3. Edge strip for retaining a filter cloth (12) according to claim 1 or 2,
**characterized in that**
at least one reinforcing element is arranged inside of the edge strip (10).

4. Edge strip for retaining a filter cloth (12) according to one of claims 1 to 3,
**characterized in that**
there are three threads (22, 24, 26) as reinforcing elements inside of the edge strip (10), a first thread (22) running inside the base (14), a second thread (24) running inside the first wing (18) and a third thread (26) running inside the second wing (20).

5. Edge strip for retaining a filter cloth (12) according to one of claims 1 to 4,
**characterized in that**
the edge strip (10) comprises a flexible rubber, synthetic rubber or plastic material, in particular a thermoplastic elastomer.

6. Filter element comprising a filter cloth (12),
**characterized in that**
an edge of the filter cloth (12) is connected to an edge strip (10) according to one of the claims 1 to 5.

7. Filter element according to claim 6,
**characterized in that**
the filter cloth (12) is surrounded by the edge strip (10) forming a closed loop, wherein the first wing (18) faces the centre of the closed loop.

8. Filter element according to claim 7,
**characterized in that**
the form of the loop is a square, a rectangle, an octagon, a polygon, a circle or an ellipsoid.

9. Filter element according to one of claims 6 to 8,
**characterized in that**
the second wing (20) has a cut or a notch at a position where the edge strip (10) is curved.

10. Filter element according to one of claims 6 to 9,
**characterized in that**
the filter cloth (12) is fixed to the first wing (18) by sewing, stitching, casting, injection moulding, gluing, welding or heat-sealing.

11. Filter comprising
- a filter element according to one of claims 6 to 10 and
- a frame member for the reception of the edge strip (10) for retaining a filter cloth (12) according to claims 1 to 5,
wherein a portion of the frame member (16) comprises a channel (30) for a positive-fit reception of the base (14) of the edge strip (10), wherein the channel (30) is surrounded by an inner edge surface (32) and an outer edge surface (34), the inner edge surface (32) being essentially orthogonal to the channel (30) and facing the side of the edge strip (10) which receives the filter cloth (12), and the outer edge surface (34) is arranged obliquely to the inner edge surface (32).

12. Filter according to claim 11,
**characterized in that**
the channel (30) forms a closed loop.

13. Filter according to claim 11 or 12,
**characterized in that**
the form of the loop is a square, a rectangle, an octagon, a polygon, a circle or an ellipsoid.

14. Filter according to one of claims 11 to 13,
**characterized in that**
the filter element (28) according to claims 6 to 10 is fixed to the frame member (16).

## Patentansprüche

1. Randstreifen zum Zurückhalten eines Filtertuchs (12) in einem Rahmenelement, wobei der Randstreifen (10)
- ein am Rahmenelement (16) befestigbares Unterteil (14) und
- einen mit dem Filtertuch verbindbaren Verbindungsbereich aufweist,
**dadurch gekennzeichnet,**
- **dass** eine zwei-flügelige Struktur (18, 20) mit einem ersten Flügel (18) und einem zweiten Flügel (20), die sich im Wesentlichen in entgegengesetzte Richtungen von dem Unterteil (14) erstrecken, vorgesehen ist,
- **dass** der erste Flügel (18) den Verbindungsbereich zum Verbinden des Filtertuchs (12) bildet, und
- **dass** der zweite Flügel (20) bezüglich des ersten Flügels (18) schräg angeordnet ist und aus einer Ebene des Verbindungsbereichs hervorragt, wobei zwischen dem ersten Flügel (18) und dem zweiten Flügel (20) ein Winkel größer als 90° und weniger als 180° besteht.

2. Randstreifen zum Zurückhalten eines Filtertuchs (12) nach Anspruch 1,
**dadurch gekennzeichnet,**
**dass** das Unterteil (14) und die Flügel (18, 20) in einem Stück extrudiert sind.

3. Randstreifen zum Zurückhalten eines Filtertuchs (12) nach einem der Ansprüche 1 oder 2,
**dadurch gekennzeichnet,**
**dass** mindestens ein Verstärkungselement innerhalb des Randstreifens (10) angeordnet ist.

4. Randstreifen zum Zurückhalten eines Filtertuchs (12) nach einem der Ansprüche 1 bis 3,
**dadurch gekennzeichnet,**
**dass** drei Fäden (22, 24, 26) als Verstärkungselemente innerhalb des Randstreifens (10) vorhanden sind, wobei ein erster Faden (22) innerhalb des Unterteils (14), ein zweiter Faden (24) innerhalb des ersten Flügels (18) und ein dritter Faden (26) innerhalb des zweiten Flügels (20) verläuft.

5. Randstreifen zum Zurückhalten eines Filtertuchs (12) nach einem der Ansprüche 1 bis 4,
**dadurch gekennzeichnet,**
**dass** der Randstreifen (10) einen flexiblen Gummi, synthetischen Kautschuk oder Kunststoff, insbesondere ein thermoplastisches Elastomer aufweist.

6. Filterelement mit einem Filtertuch (12),
**dadurch gekennzeichnet,**
**dass** ein Rand des Filtertuchs (12) mit einem Randstreifen (10) nach einem der Ansprüche 1 bis 5 verbunden ist.

7. Filterelement nach Anspruch 6,
**dadurch gekennzeichnet,**
**dass** das Filtertuch (12) von dem Randstreifen (10) unter Bildung einer geschlossenen Schleife eingefasst ist,
wobei der erste Flügel (18) dem Mittelpunkt der geschlossenen Schleife zugewandt ist.

8. Filterelement nach Anspruch 7,
**dadurch gekennzeichnet,**
**dass** die Form der Schleife ein Quadrat, ein Rechteck, ein Achteck, ein Vieleck, ein Kreis oder ein Ellipsoid ist.

9. Filterelement nach einem der Ansprüche 6 bis 8,
**dadurch gekennzeichnet,**
**dass** der zweite Flügel (20) einen Einschnitt oder eine Einkerbung an einer Position aufweist, wo der Randstreifen (10) gebogen ist.

10. Filterelement nach einem der Ansprüche 6 bis 9,
**dadurch gekennzeichnet,**
**dass** das Filtertuch (12) an dem ersten Flügel (18) durch Annähen, Heften, Gießen, Spritzgießen, Kleben, Schweißen oder durch Wärmeversiegelung angebracht ist.

11. Filter mit
- einem Filterelement nach einem der Ansprüche 6 bis 10 und
- einem Rahmenelement für die Aufnahme des Randstreifens (10) zum Halten des Filtertuchs (12) nach einem der Ansprüche 1 bis 5,
wobei ein Bereich des Rahmenelements (16) eine Rinne (30) zur formschlüssigen Aufnahme des Unterteils (14) des Randstreifens (10) aufweist, wobei die Rinne (30) von einer inneren Randfläche (32) und einer äußeren Randfläche (34) eingefasst ist, wobei die innere Randfläche (32) im Wesentlichen orthogonal zu der Rinne (30) und der Seite des Randstreifens (10) zugewandt ist, welche das Filtertuch (12) aufnimmt und die äußere Randfläche (34) schräg zu der inneren Randfläche (32) angeordnet ist.

12. Filter nach Anspruch 11,
**dadurch gekennzeichnet,**
**dass** die Rinne (30) eine geschlossene Schleife ausbildet.

13. Filter nach einem der Ansprüche 11 oder 12,
**dadurch gekennzeichnet,**
**dass** die Form der Schleife ein Quadrat, ein Rechteck, ein Achteck, ein Vieleck, ein Kreis oder ein Ellipsoid ist.

14. Filter nach einem der Ansprüche 11 bis 13,
**dadurch gekennzeichnet,**
**dass** das Filterelement (28) nach den Ansprüchen 6 bis 10 an dem Rahmenelement (16) befestigt ist.

## Revendications

1. Bande de bordure destinée à retenir une toile filtrante (12) dans un élément de cadre, la bande (10) de bordure comprenant :
- une base (14) pouvant être fixée sur l'élément (16) de cadre, et
- une portion de liaison pouvant être couplée à la toile filtrante,
***caractérisée en ce que***
- une structure à deux ailes (18, 20), avec une première aile (18) et une deuxième aile (20) s'étendant dans des directions sensiblement opposées à partir de la base (14), est prévue,
- la première aile (18) forme la portion de liaison pour coupler la toile filtrante (12), et
- la deuxième aile (20) est placée de manière oblique par rapport à la première aile (18) et fait saillie d'un plan de la portion de liaison, un angle formé entre la première aile (18) et la deuxième aile (20) étant supérieur à 90° et inférieur à 180°.

2. Bande de bordure destinée à retenir une toile filtrante (12) selon la revendication *1, **caractérisée en ce que*** la base (14) et les ailes (18, 20) sont extrudées en une pièce.

3. Bande de bordure destinée à retenir une toile filtrante (12) selon la revendication 1 ou 2, ***caractérisée en ce qu*'**au moins un élément de renfort est placé à l'intérieur de la bande (10) de bordure.

4. Bande de bordure destinée à retenir une toile filtrante (12), selon l'une quelconque des revendications 1 à 3, ***caractérisée en ce que*** trois fils (22, 24, 26) servent d'éléments de renfort à l'intérieur de la bande (10) de bordure, un premier fil (22) courant à l'intérieur de la base (14), un deuxième fil (24) courant à l'intérieur de la première aile (18) et un troisième fil (26) courant à l'intérieur de la deuxième aile (20).

5. Bande de bordure destinée à retenir une toile filtrante (12) selon l'une quelconque des revendications 1 à 4, ***caractérisée en ce que*** la bande (10) de bordure comprend un matériau flexible en caoutchouc, en caoutchouc synthétique ou en plastique, en particulier un élastomère thermoplastique.

6. Elément de filtre comprenant une toile filtrante (12), ***caractérisé en ce qu*'**une bordure de la toile filtrante (12) est couplée à une bande (10) de bordure selon l'une des revendications 1 à 5.

7. Elément de filtre selon la revendication 6, ***caractérisé en ce que*** la toile filtrante (12) est entourée par la bande (10) de bordure formant une boucle fermée, la première aile (18) faisant face au centre de boucle fermée.

8. Elément de filtre selon la revendication 7, ***caractérisé en ce que*** la forme de la boucle est celle d'un carré, d'un rectangle, d'un octogone, d'un polygone, d'un cercle ou d'une ellipse.

9. Elément de filtre selon l'une des revendications 6 à 8, ***caractérisé en ce que*** la deuxième aile (20) comporte une découpe ou une entaille au niveau d'une position où la bande (10) de bordure est incurvée.

10. Elément de filtre selon l'une des revendications 6 à 9, ***caractérisé en ce que*** la toile filtrante (12) est fixée à la première aile (18) par couture, piqûre, moulage, moulage par injection, collage, soudage ou thermosoudage.

11. Filtre comprenant ;
- un élément de filtre selon l'une des revendications 6 à 10, et
- un élément de cadre pour la réception de la bande (10) de bordure destinée à retenir une toile filtrante (12) selon les revendications 1 à 5,
dans lequel une portion de l'élément (16) de cadre comporte une gorge (30) pour une réception sûre et précise de la base (14) de la bande (10) de bordure, dans lequel la gorge (30) est entourée par une surface de bordure intérieure (32) et une surface de bordure extérieure (34), la surface de bordure intérieure (32) étant sensiblement orthogonale à la gorge (30) et faisant face au côté de la bande (10) de bordure qui reçoit la toile filtrante (12), et la surface de bordure extérieure (24) est disposée obliquement à la surface de bordure intérieure (32).

12. Filtre selon la revendication 11, ***caractérisé en ce que*** la gorge (30) forme une boucle fermée.

13. Filtre selon la revendication 11 ou 12, ***caractérisé en ce que*** la forme de la boucle est celle d'un carré, d'un rectangle, d'un octogone, d'un polygone, d'un cercle ou d'une ellipse.

14. Filtre selon l'une des revendications 11 à 13, ***caractérisé en ce que*** l'élément (28) de filtre selon les revendications 6 à 10 est fixé sur l'élément (16) de cadre.
